# EUROPEAN PATENT APPLICATION

(11) **EP 4 046 976 A1**
(43) Date of publication of application: **24.08.2022**
(21) Application number: 20877706.0
(22) Date of filing: 07.10.2020
(51) Int. Cl.: C04B 28/14, C04B 7/02, C04B 7/19, C04B 7/32, C04B 14/28

(54) **SELF-LEVELING MATERIAL COMPOSITION**

(30) Priority: 15.10.2019 JP 2019188315
(71) Applicant: Yoshino Gypsum Co., Ltd., Tokyo 100-0005 (JP)
(72) Inventor: WADA, Masahiro, Tokyo 100-0005 (JP); KUBO, Hiroyuki, Tokyo 100-0005 (JP)
(74) Representative: Schiener, Jens
(86) International application number: PCT/JP2020/037962
(87) International publication number: WO 2021/075322

(57) **Abstract**

The present invention provides a gypsum-based self-leveling material that is excellent in practical use in that usable time is kept stably, variations in light walking possible time, which have occurred under low temperature conditions in air temperature variations or the like, are suppressed to a lower level, and a remarkable work efficiency-improving effect as compared to that in conventional products has been realized. The gypsum-based self-leveling material composition is as follows, that is, a gypsum-based self-leveling material composition contains: a base material component containing gypsum hemihydrate as an essential component and optionally containing an inorganic aggregate and cement as optional components; and an additive, wherein: when the total amount of the base material components is assumed to be 100 parts on a mass basis, a content of the gypsum hemihydrate is 55 to 100 parts; the gypsum hemihydrate contains **α**-gypsum hemihydrate and **β**-gypsum hemihydrate, and when the total amount of **α**-gypsum hemihydrate and **β**-gypsum hemihydrate is assumed to be 100 parts, a content of **α**-gypsum hemihydrate is 70 to 95 parts, and a content of **β**-gypsum hemihydrate is 5 to 30 parts, and further, when the total amount of the base material components is assumed to be 100 parts, the content of **β**-gypsum hemihydrate is 20 parts by mass or less; and a change in length, specified in JASS 15M-103, is 0.05% or less.

## Description

### Technical Field

The present invention relates to a self-leveling material composition which is used as a floor finishing substrate material or the like, and particularly relates to a technique that provides a gypsum-based self-leveling material composition which exhibits characteristics excellent in construction workability.

### Background Art

A self-leveling material composition (hereinafter, also referred to as a self-leveling material or a SL material) is widely used as a floor finishing substrate material because when the self-leveling material composition is kneaded with water to make it into a slurry, and the slurry is just poured on a floor, the slurry flows naturally and forms a horizontal surface to set. Self-leveling materials currently spread include gypsum-based self-leveling materials and cement-based self-leveling materials, which are specified in JASS 15M-103 (quality standards for self-leveling materials).

A gypsum-based self-leveling material is a product exhibiting a smaller change in length than a cement-based self-leveling material. Specifically, the gypsum-based self-leveling material is a product exhibiting a change in length, specified in JASS 15M-103 (quality standards for self-leveling materials), of 0.05% or less. Because the change in length is small, the gypsum-based self-leveling material has the following advantageous points as compared to the cement-based self-leveling material. Specifically, the gypsum-based self-leveling material has advantageous points: troubles of cracks in the constructed SL material are less likely to occur; a slurry has excellent fluidity; and the setting time is short.

In gypsum-based self-leveling material products, the setting time is set to 3 hours under a normal condition (air temperature 20°C). The SL material is a substrate material, and in order to complete a floor surface, the following procedures need to be done: the SL material made into a slurry is poured on the floor; and when a person can stand on a set body and walk without leaving a footprint after the slurry is set to a certain extent, the person stands on the set body and conduct the next work. The time until the next work can be conducted after pouring the slurry is referred to as "light walking possible time."

### Summary of Invention

### Technical Problem

When construction work is conducted using a gypsum-based SL material product for which the setting time has been set, light walking becomes possible within 4 hours at an air temperature of 20 to 35°C in spring to autumn. However, in winter or the like when the air temperature becomes 10°C or lower, light walking is not possible after the elapse of 6 hours or longer, which is a cause for lowering of work efficiency. That is, when the "light walking possible time" is long, as long as 6 hours or longer, subsequent work for repairing the SL material with which the construction work has been conducted, subsequent work for removing a flow-stopping frame or the like, and so on cannot be conducted on the day of the construction work using the SL material, and therefore the construction period needs one extra day.

On the other hand, according to studies conducted by the present inventors, when the setting time for a gypsum-based SL material product is adjusted in such a way that light walking becomes possible within 4 hours in winter, the usable time for a slurry is made short, making it difficult to conduct construction work using the SL material. The usable time herein refers to time during which work, such as leveling a slurry after making a SL material into the slurry and pouring the slurry on a floor, can smoothly be conducted. Generally, the usable time of 20 minutes or longer needs to be secured taking a series of work procedures into consideration. In addition, when the usable time is short, the basic performance that is required for a gypsum-based SL material is not exhibited sufficiently, so that a problem on product quality that unevenness or a wrinkle occurs on the surface of the SL material with which construction work has been done is brought about.

Under the above-described current circumstances in gypsum-based SL material products, a study on providing a gypsum-based SL material that is excellent in workability in that the required usable time is secured, and variations in the "light walking possible time," which varies significantly depending on the air temperature and which becomes long particularly when construction is conducted under low temperature conditions, are suppressed to a low level, so that a problem of lowering the efficiency during construction, caused by variations in air temperature, is suppressed, has not been conducted so far as far as the present inventors know. Providing such a gypsum-based SL material is a technical target of the present invention.

Accordingly, an object of the present invention is to provide a gypsum-based self-leveling material such that the usable time is kept stably without being shortened, variations in light walking possible time, which occur under low air temperature conditions, such as those in winter, are suppressed, the basic performance required for SL materials can sufficiently be exhibited, and a problem of lowering of work efficiency, which occurs due to air temperature variations, is solved by simple composition.

### Solution to Problem

The object is achieved by the present invention described below. That is, the present invention provides a gypsum-based self-leveling material composition described below.
[1] A gypsum-based self-leveling material composition comprising: a base material component comprising gypsum hemihydrate as an essential component and optionally comprising at least any one of an inorganic aggregate and cement as an optional component; and an additive, wherein: when the total amount of the base material components is assumed to be 100 parts by mass, a content of the gypsum hemihydrate is 55 to 100 parts by mass; the gypsum hemihydrate comprises **α**-gypsum hemihydrate and **β**-gypsum hemihydrate, and when the total amount of **α**-gypsum hemihydrate and **β**-gypsum hemihydrate is assumed to be 100 parts by mass, a content of **α**-gypsum hemihydrate is 70 to 95 parts by mass, and a content of **β**-gypsum hemihydrate is 5 to 30 parts by mass, and further, when the total amount of the base material components is assumed to be 100 parts by mass, the content of **β**-gypsum hemihydrate is 20 parts by mass or less; and a change in length, specified in JASS 15M-103 (quality standards for self-leveling materials), is 0.05% or less.
   The present invention provides the gypsum-based self-leveling material composition having composition described below as preferred embodiments of the self-leveling material composition described above.
[2] The gypsum-based self-leveling material composition according to [1], wherein when the total amount of the base material components is assumed to be 100 parts by mass, the content of the gypsum hemihydrate is 55 to 100 parts by mass, the content of the cement is 0 to 25 parts by mass, and the content of the inorganic aggregate is 0 to 30 parts by mass.
[3] The gypsum-based self-leveling material composition according to [1] or [2], wherein the cement is any one selected from the group consisting of normal Portland cement, high-early-strength Portland cement, blast furnace cement, and alumina cement.
[4] The gypsum-based self-leveling material composition according to any one of [1] to [3], wherein constituents of the base material are the gypsum hemihydrate and the cement.
[5] The gypsum-based self-leveling material composition according to any one of [1] to [3], wherein the inorganic aggregate is calcium carbonate.
[6] The gypsum-based self-leveling material composition according to any one of [1] to [5], wherein when the total amount of the gypsum hemihydrate is assumed to be 100 parts by mass, the content of **α**-gypsum hemihydrate is 80 to 90 parts by mass, and the content of **β**-gypsum hemihydrate is 10 to 20 parts by mass.
[7] The gypsum-based self-leveling material composition according to [1], wherein when the total amount of the base material components is assumed to be 100 parts by mass, the content of the gypsum hemihydrate is 100 parts by mass, and the optional components are not contained.

### Advantageous Effects of Invention

According to the present invention, a gypsum-based self-leveling material composition that is excellent in practical use, as described below, in spite of simple composition can be provided. That is, the gypsum-based self-leveling material composition is excellent in practical use in that: sufficient functionality as a SL material has been achieved, that is, variations in light walking possible time, which have occurred under low air temperature conditions, such as those in winter, are suppressed to a low level while the usable time is kept stably without being shortened; a work efficiency improving effect, which is remarkable as compared to conventional products, has been achieved by suppressing a problem of lowering of work efficiency during construction, which occurs due to air temperature variations; and the functionality and the effect have been achieved in spite of simple formation.

### Description of Embodiments

Hereinafter, the present invention will be described in more detail with reference to preferred embodiments. Firstly, terms are explained. In the present invention, the expression "light walking becomes possible" in determining "light walking possible time" for a SL material refers to a state in which the SL material is set to such a certain extent that a slurry of the poured SL material is set and, as a result, walking becomes possible on the surface of the SL material without leaving a footprint. In the present invention, a durometer (rubber hardness tester), which is generally used for measuring the hardness of various rubber and plastic products and the like, is utilized in order to grasp this state of the set body on which light walking is possible by also an objective numerical value. Specifically, the hardness of the surface of the set body is measured using a durometer (Type D, JIS K 6253), and the measured value is used as an index to objectively decide an extent of setting the poured slurry of the SL material. In the present invention, the time when the surface hardness of a set body, as measured by a durometer, becomes 55 points or higher after pouring a SL material is defined as the "light walking possible time."

Note that in the present invention, the "self-leveling material composition" or the "self-leveling material (SL material)" refers to the one in a state of a powder before kneading the powder with water (kneading water), and a "slurry" refers to the self-leveling material composition or the self-leveling material made into a slip by kneading the self-leveling material composition or the self-leveling material with water (kneading water).

The present inventors have conducted diligent studies to solve the above-described problem of the conventional techniques to complete the present invention. As a method of adjusting the usable time of a slurry, an additive, such as a setting retarder or a water reducing agent, has been blended as a material for forming a SL material in the past. However, according to studies conducted by the present inventors, a product for which the "light walking possible time," which is made longer when construction is performed under low air temperature conditions, such as those in winter, is adjusted in such a condition that is suitable in construction work without shortening the usable time, which gives an influence on the basic quality of the SL material, has not been able to be obtained by devising a combination of these additives. Specifically, obtaining a product for which the light walking possible time is adjusted to, for example, within 5 hours, which is shorter than conventional products, suitably within 4 hours, under a low temperature condition of about 10°C has not been able to be achieved.

Facing the above-described problem, the present inventors have considered that devising a base material itself, not devising an additive, is the means by which achieving the technical target of the present invention can be realized, and thus the present inventors have conducted diligent studies. In conventional products, **α**-gypsum hemihydrate is used as gypsum hemihydrate which is a main component of a base material that forms a gypsum-based SL material. Gypsum hemihydrate is classified into **α**-gypsum hemihydrate and **β**-gypsum hemihydrate, and the calcination method is different for each of these. **α**-gypsum hemihydrate is produced by a wet process, and **β**-gypsum hemihydrate is produced by a dry process. The mixing water amount for normal consistency, specified in JIS R 9111, is smaller for **α**-gypsum hemihydrate than for **β**-gypsum hemihydrate, and therefore the amount of water necessary for setting **α**-gypsum hemihydrate is smaller than the amount of water necessary for setting **β**-gypsum hemihydrate. This is considered to be a cause for the following: use of **α**-gypsum hemihydrate has an advantageous point that the strength after setting is higher than in the case where **β-**gypsum hemihydrate is used. From those described above, **α-**gypsum hemihydrate has been used as a base material in conventional gypsum-based SL materials.

Under the current circumstances as described above, the present inventors have conducted diligent studies to find that surprisingly enough, the technical target of the present invention can be achieved by extremely simple means of forming composition such that **α-**gypsum hemihydrate and **β**-gypsum hemihydrate are used together as gypsum hemihydrate which is used as the base material although using gypsum hemihydrate as the main component of the base material that forms a gypsum-based SL material is the same as in conventional products. In addition, as a result of further studies, the present inventors have found that a remarkable effect that is the object of the present invention is obtained stably and surely by forming composition such that: when the total amount of **α**-gypsum hemihydrate and **β**-gypsum hemihydrate is assumed to be 100 parts by mass, **α**-gypsum hemihydrate is used in a range of 70 to 95 parts by mass, and the amount of **β**-gypsum hemihydrate falls within a range of 5 to 30 pars by mass; and further, when the total amount of the base material components is assumed to be 100 parts by mass, the content of **β**-gypsum hemihydrate is 20 parts by mass or less, and thus the present invention has been completed.

Specifically, the present inventors have found that variations in the light walking possible time due to the air temperature can be made remarkably smaller than those for conventional products while the usable time is secured by forming composition of gypsum hemihydrate, which is to be used, as described above in the case where construction in winter is taken into consideration. As just described, the light walking possible time for a SL material product obtained according to the present invention does not vary significantly depending on the air temperature, and therefore construction work using the SL material can be conducted stably and efficiently at all times irrespective of variations in the air temperature. Ripple effects, which are obtained by this, on improvements in work efficiency, and so on are extremely large. Note that it has also been found that even though **β**-gypsum hemihydrate is used in the above-described range, the SL material product obtained according to the present invention is not inferior, in terms of the strength after setting, to conventional SL material products in which all the gypsum hemihydrate is composed of **α**-gypsum hemihydrate.

Firstly, the present inventors have conducted studies on the case where the whole composition of the base material components is formed of gypsum hemihydrate without using other materials. As a result, the present inventors have found that by forming composition in which **α**-gypsum hemihydrate and **β**-gypsum hemihydrate are used together, the light walking possible time in the case where construction is conducted under a low temperature condition of, for example, 10°C can be shortened without giving an influence on the usable time. In addition, on that occasion, the viscosity of the slurry is increased by using **β**-gypsum hemihydrate together with **α**-gypsum hemihydrate, but it has been found that the extent of the viscosity increase can be suppressed within a range of practical use by adjusting the use amount of **β**-gypsum hemihydrate which is used together with **α**-gypsum hemihydrate. Specifically, as will be described later, the present inventors have found that by setting the content of **α**-gypsum hemihydrate to 70 to 95 parts by mass and setting the content of **β**-gypsum hemihydrate which is used together with **α**-gypsum hemihydrate to 5 to 30 parts by mass when the total amount of the gypsum hemihydrate is assumed to be 100 parts by mass, the light walking possible time, which is made long by variations in the air temperature and has been a cause for lowering of work efficiency in winter, can be shortened to 4 hours or longer and shorter than 5 hours even under low temperature conditions while the usable time, which gives an influence on the basic quality of a SL material, is secured.

Moreover, the present inventors have ascertained that it is effective to set the content of **β-**gypsum hemihydrate to 10 parts by mass or more in order to shorten the light walking possible time further to within 4 hours irrespective of variations in the air temperature. Further, the present inventors have found that in the case where the increase in the viscosity of the composition, which is brought about by using **β**-gypsum hemihydrate, is taken into consideration, the content of **β**-gypsum hemihydrate needs to be adjusted to 20 parts by mass or less when the total amount of the base material components is assumed to be 100 parts by mass. Those described above mean that the effect that is the object of the present invention can be obtained and a gypsum-based SL material composition that is suitable for practical use can be prepared by: forming the whole composition of the base material components with gypsum hemihydrate without using other materials; and adjusting the amount of **β**-gypsum hemihydrate which is used together with **α**-gypsum hemihydrate in such a way as to be specified in the present invention.

Next, the present inventors have conducted detailed studies on the effect of shortening the light walking possible time in the above-described low temperature environments and on the influence on the viscosity increase brought about by using **β**-gypsum hemihydrate together with **α**-gypsum hemihydrate in order to obtain the effect in the case of forming base material composition in which cement and an inorganic aggregate, which are usually used together with gypsum hemihydrate, are used together with gypsum hemihydrate as materials for the base material of the SL material.

The cement and the inorganic aggregate are used for building materials for the purpose of improving the strength, reducing costs, and so on. Usually, in a gypsum-based SL material, a base material is prepared by using, as the main component, 55 parts by mass or more of gypsum hemihydrate assuming that the total amount of the base material components is 100 parts by mass and blending cement and an inorganic aggregate, such as, for example, calcium carbonate, as additional components. The present inventors have prepared SL material compositions each having base material composition such that in composition of 100 parts by mass of the base material components, each of the cement in a range of 5 to 30 parts by mass and calcium carbonate, which is an inorganic aggregate, in a range of 10 to 35 parts by mass is blended in a stepwise manner based on 65 parts by mass of gypsum hemihydrate obtained by blending **α**-gypsum hemihydrate and **β**-gypsum hemihydrate in such a way as to be 90:10, and have conducted studies on the influence on the viscosity, the usable time, and the light walking possible time using slurries of these SL material compositions. As a result, as will be described later, it has been found that the same effect as described above is also obtained in the case where the base material obtained by blending the cement in a range of 5 to 25 parts by mass and the inorganic aggregate in a range of 10 to 30 parts by mass is used. That is, the present inventors have found that by using gypsum hemihydrate as the main component of the base material and forming composition of the gypsum hemihydrate in such a way as to satisfy the requirement for blending **α**-gypsum hemihydrate and **β**-gypsum hemihydrate, as specified in the present invention, a remarkable effect such that the light walking possible time under a low temperature condition of, for example, about 10°C can be shortened to within 5 hours, suitably within 4 hours, without bringing about a problem in the viscosity and the usable time also in the case where the cement and the inorganic aggregate are used as optional components of the base material.

Hereinafter, each material and the like that can form the self-leveling material composition of the present invention will be described.

### (Base Material Components)

The base material components that form the self-leveling material composition of the present invention can be made into composition such that it is essential to use gypsum hemihydrate, which is a hydraulic material, as the main component, and if necessary, cement and an inorganic aggregate, such as calcium carbonate, are blended as optional components. An important thing in the self-leveling material composition of the present invention is to use gypsum hemihydrate as the main component of the base material and, on that occasion, to use, together with **α-**gypsum hemihydrate, **β**-gypsum hemihydrate in a particular combination specified in the present invention. First of all, in the present invention, it is essential that the self-leveling material composition contain 55 parts by mass or more of gypsum hemihydrate in 100 parts by mass of the base material components, and if necessary, cement or an inorganic aggregate, such as calcium carbonate, which is used as an extender may be used as the material for the base material, thereby making a gypsum-based self-leveling material composition in which the amount of gypsum hemihydrate contained in the base material is larger than the total amount of the other materials. The SL material of the present invention is a gypsum-based SL material as described above, and the gypsum-based SL material has an advantageous point that dry contraction of a set body of a knead product (slurry) obtained by kneading the gypsum-based SL material with water is smaller and cracks are less likely to occur as compared to cement-based SL materials in which cement is contained in a large amount in the base material. Therefore, it is an essential requirement in the SL material of the present invention to form composition of the base material in such a way that the content of gypsum hemihydrate is 55 parts by mass or more when the total amount of the base material components is assumed to be 100 parts by mass. According to studies conducted by the present inventors, the additional material (component) for the base material, which can optionally be blended as necessary without impairing the effect of the present invention, is at least any one of an inorganic aggregate and cement. With respect to the range of the blending amount of these optional components, the content of the cement is preferably about 0 to about 25 parts by mass, and the content of the inorganic aggregate is preferably about 0 to about 30 parts by mass.

### <Gypsum Hemihydrate>

Gypsum hemihydrate that is an essential component of the base material that forms the SL material of the present invention is characterized by forming composition such that **α**-gypsum hemihydrate and **β**-gypsum hemihydrate are used together. The calcination method is different for each of **α**-gypsum hemihydrate and **β**-gypsum hemihydrate. **α**-gypsum hemihydrate is produced by a wet process and is obtained by calcining gypsum dihydrate in water (including steam). **β-**gypsum hemihydrate is produced by a dry process and is obtained by calcining gypsum dihydrate in the atmospheric air. As described above, **α**-gypsum hemihydrate has been used in conventional gypsum-based SL materials because **α-**gypsum hemihydrate has an advantageous point that the amount of water necessary for setting is small and the strength obtained when **α**-gypsum hemihydrate is set is high. On the other hand, in the SL material of the present invention, **β**-gypsum hemihydrate is used together with **α-**gypsum hemihydrate for gypsum hemihydrate that forms the base material, and **α**-gypsum hemihydrate and **β**-gypsum hemihydrate are used in proportions such that the content of **α**-gypsum hemihydrate is 70 to 95 parts by mass and the content of **β**-gypsum hemihydrate is 5 to 30 parts by mass when the total amount of **α**-gypsum hemihydrate and **β**-gypsum hemihydrate is assumed to be 100 parts by mass. Preferably, the content of **α**-gypsum hemihydrate is 80 to 90 parts by mass, and the content of **β**-gypsum hemihydrate is 10 to 20 parts by mass. Further, with respect to the amount of **β**-gypsum hemihydrate that forms the base material in the SL material of the present invention, composition is formed in such a way that the content of **β**-gypsum hemihydrate falls within a range of 20 parts by mass or less when the total amount of the gypsum hemihydrate base material is assumed to be 100 parts by mass. By forming the above-described composition, the SL material of the present invention can realize excellent workability, which has not been obtained by any of conventional SL materials, and is never inferior in the strength after construction as compared to conventional products in which the whole composition is composed of **α**-gypsum hemihydrate. The lower limit of the use amount of **β**-gypsum hemihydrate in the base material is not particularly limited and may be, for example, 3 parts by mass or more.

### <Cement>

Cement can be used as necessary for the base material that forms the SL material of the present invention. Examples of the cement which can be used as a material for the base material include the following. That is, examples thereof include various types of cement, such as normal Portland cement, high-early-strength Portland cement, moderate heat Portland cement, blast furnace cement, silica cement, fly ash cement, alumina cement, and jet cement. A cement material selected from these can appropriately be used as an optional component of the base material that forms the SL material of the present invention. The above-described cement is appropriately blended in the base material for the purpose of improving water fastness of, for example, a floor finishing substrate material formed of the SL material. The blending amount of the cement, when used as an optional component of the base material, may be set to, for example, about 5 to about 25 parts by mass in 100 parts by mass of the base material components.

### <Inorganic Aggregate>

An inorganic aggregate can be used as necessary for the base material that forms the SL material of the present invention. For example, calcium carbonate, which is widely used as an extender, or the like can be used as the inorganic aggregate which can be used as a material for the base material. The price of calcium carbonate is low, and by using this as an extender, the objective SL material can be provided at a low price. The blending amount of the inorganic aggregate, when used as an optional component of the base material, may be set to, for example, about 10 to about 30 parts by mass in 100 parts by mass of the base material components.

### (Additives)

In the gypsum-based SL material of the present invention, additives, such as a water reducing agent (fluidizer or dispersant), a defoamer, a thickener, and a setting retarder, are appropriately selected and blended as necessary, which is similar to conventional products, and in a range not contrary to the expected purpose of the present invention. These additives are preferably blended in the total amount of 5% or less based on the amount of the base material.

Use of the water reducing agent (fluidizer or dispersant) is not particularly limited as long as the water reducing agent is generally sold on the market. Usually, a polycarboxylic acid-based water reducing agent, a naphthalene-based water reducing agent, a lignin-based water reducing agent, and the like can be used. In the case of a SL material, excellent fluidity needs to be obtained with an amount of water as small as possible, and therefore a water reducing agent is usually used. On that occasion, if the use amount is too small, the effect is not obtained, and to the contrary, if the use amount is too large, separation of an inorganic aggregate or the like which is used as an optional component is brought about, which may be a cause for lowering of the strength of the horizontal surface to be formed, and therefore care should be taken.

The water reducing agent can also be used for adjusting a flow value by adding it at the time of construction in which a slurry is prepared. According to studies conducted by the present inventors, when the blending amount of **α**-gypsum hemihydrate that forms the base material is increased, the flow value can be made large, but there is a stronger tendency to cause setting retardation at low temperatures, making the light walking possible time longer than in the case of **β**-gypsum hemihydrate. To the contrary, when the amount of **α**-gypsum hemihydrate that forms the base material is reduced, the flow value is made small, and therefore the use amount of the water reducing agent is increased. On the other hand, when the use amount of the water reducing agent is increased, setting retardation occurs, making the light walking possible time, which is intended to be shortened in the present invention, longer, and therefore excessive use of the water reducing agent is not preferable also from this point. Further, an economic problem that the cost for the chemical increases occurs.

As the defoamer, a general purpose defoamer, such as, for example, a polyether-based surfactant, a silicone-based surfactant, an alcohol-based surfactant, a mineral oil-based surfactant, and a vegetable oil-based surfactant, and a nonionic surfactant, can appropriately be used.

As the setting retarder, a citric acid salt, such as sodium citrate, a succinic acid salt, an acetic acid salt, a malic acid salt, a boric acid salt, such as borax, sucrose, hexametaphosphate, ethylenediamine tetraacetate, diethylenetriamine pentaacetate, starch and a protein degradation product, and the like can be used. The blending amount of the setting retarder may be set to such an extent that a necessary setting retardation function can be accomplished.

A thickener may be blended in the SL material of the present invention for the purpose of preventing separation of the aggregate in such a way that a slurry (kneaded product), when prepared by kneading the SL material of the present invention with water, has viscosity of a certain level or higher. As the thickener, a cellulose ether or the like can be used.

### (Construction Site)

The SL material of the present invention is made into a slurry (kneaded product) by adding water and sufficiently mixing/kneading a resultant mixture, and the slurry is then poured on the floor substrate surface and is spread, left to stand, set, and dried to form a floor finishing substrate material. Examples of the floor substrate surface include mortar, cement, wood, a plastic tile or sheet, ceramics, and a metal such as stainless steel. In this regard, the SL material of the present invention is not different from conventional SL materials at all.

As described above, when construction is conducted using the SL material of the present invention, the SL material of the present invention needs to be made into a slurry by kneading it with water. The blending amount of water to be used is preferably about 35 to about 70 parts by mass per 100 parts by mass of the base material. When the blending amount of water is small, sufficient fluidity is not obtained, so that it is difficult to spread the slurry and the workability may be lowered. To the contrary, when the blending amount of water is too large, deterioration of the surface state or lowering of the strength is brought about due to unevenness of the surface of the set body, and therefore neither of the cases is preferable. The SL material of the present invention is preferably such that the flow value, as determined when the slurry (slip) is poured, is adjusted to be 190 mm or more, for example, 210 mm or more and 260 mm or less.

### Examples

Hereinafter, the present invention will be described more specifically with reference to Examples and Comparative Examples. However, the present invention is not limited to these Examples. Note that "parts" in the description are on a mass basis unless otherwise noted.

### [Examples 1-1 to 1-5 and Comparative Examples 1 and 2]

As a base material, 65 parts of gypsum hemihydrate and 15 parts of normal Portland cement were prepared, and as an inorganic aggregate, 20 parts of calcium carbonate was prepared. On that occasion, the content of 65 parts of gypsum hemihydrate that formed the base material in each of Examples 1-1 to 1-5 and Comparative Examples 1 and 2 is as shown in Table 1. In the first place, in Comparative Example 1, the whole gypsum hemihydrate which was used for the base material was composed of **α**-gypsum hemihydrate. On the other hand, in Examples 1-1 to 1-5 and Comparative Example 2, the amount of the gypsum hemihydrate was adjusted in such a way that the relative amount of **β**-gypsum hemihydrate increased in a stepwise manner between 5 to 40 parts as shown in Table 1 in blending proportions of **α-**gypsum hemihydrate and **β**-gypsum hemihydrate (proportions of **α** and **β**) assuming the total amount of gypsum hemihydrate to be 100 parts on a mass basis. The example where the blending proportions were **α**-gypsum hemihydrate = 60 parts and **β**-gypsum hemihydrate = 40 parts was adopted as Comparative Example 2 because in the study results, which will be described later, the viscosity of the slurry was increased, and the functionality as a SL material and the construction workability were inferior.

The same setting retarder composed of the same material, the same expansion depressant composed of the same material, the same thickener composed of the same material, and the same defoamer composed of the same material were added in the same amount for each additive to the 7 types of base materials each having a different blending amount of **β**-gypsum hemihydrate: in Comparative Example 1, only **α**-gypsum hemihydrate was used; and in each of Examples 1-1 to 1-5 and Comparative Example 2, gypsum hemihydrate having a different combination of **α**-gypsum hemihydrate and **β**-gypsum hemihydrate was used, and thus seven types of SL materials each having different composition were obtained according to the usual method and in the same manner as described above.

Evaluations were conducted according to the following methods using 100 parts of each of the obtained SL materials. Firstly, 35 parts of water based on 100 parts of the SL material was added to prepare a slurry for evaluation. In order to conduct the evaluations under the same condition, the fluidity was adjusted by blending a water reducing agent in such a way that the flow value measured in accordance with JASS 15M-103 fell within 230±2 mm for all the slurries in an environment of a temperature of 20°C when the slurries were prepared.

### (Evaluations)

The physical property values of each slurry prepared using each SL material obtained in the manner as described above and the light walking possible time at the time when construction was conducted using the slurry were measured. Those were each measured under the following conditions. Note that the change in length specified in JASS 15M-103 (quality standards for self-leveling materials) was ascertained to be 0.05% or less in all the tests. The evaluation results are shown together in Table 1. In addition, evaluation results which can be decided that the target of the present invention has been accomplished are listed in "Target value for accomplishment" in Table 1.

### <Viscosity>

The viscosity was measured using a viscosity measuring device (trade name: Visco Tester "VT-06," manufactured by RION Co., Ltd.) in an environment of a temperature of 20°C. The obtained results are shown together in Table 1. In the present invention, the target value for the viscosity of the slurries was set to 10 to 20 dPa·s from the viewpoint of workability in preparing the slurries.

### <Usable Time>

The usable time means the longest time at which a slurry can be poured as a slurry after preparing the slurry. Specifically, each slurry was prepared in the manner as described above, that is, in such a way that the flow value measured in accordance with JASS 15M-103 in an environment of 20°C fell within 230±2 mm, and the obtained slurry was used and the longest time at which the flow value of the slurry, which is a value of 90% or more of the flow value which is exhibited by the slurry at the time when it is prepared, can be secured was defined as the usable time. The obtained results are shown together in Table 1. The target usable time herein was set to 20 minutes or longer taking the procedure of starting works in construction into consideration. When a worker has time of 20 minutes or longer, the worker can sufficiently smoothly and stably conduct the starting works in construction.

### <Light Walking Possible Time>

The light walking possible time means the time at which a person can get on a slurry and conduct the subsequent work after conducting construction using the slurry. In order to investigate influences of differences in temperature conditions after construction on the light walking possible time for the slurries each having different composition, tests were conducted under 2 conditions of keeping the room temperature at 10°C and keeping the room temperature at 20°C. Specifically, the surface hardness of the constructed surface was measured using a durometer (Type D, JIS K 6253) after conducting construction using the slurry, and the "light walking possible time" was objectively evaluated and checked using the measured value of the surface hardness as an index and measuring the time at which the surface hardness, measured from the point in time when the construction was conducted using the slurry, became 55 points or higher. In the present invention, the target is set in such a way that the light walking possible time measured in the manner as described above is within 5 hours even under a low temperature condition of 10°C taking preparation of a slurry, construction using the slurry, and work procedure in the next step, which can be done smoothly in one day, into consideration.

| Table 1: Combination in base material of SL material in Examples 1 and Comparative Examples 1 and 2, and evaluation results for each slurry | | | | | | | | | | |
|---|---|---|---|---|---|---|---|---|---|---|
| | | | Comparative Example 1 | Example | | | | | Comparative Example 2 | |
| | | | | 1-1 | 1-2 | 1-3 | 1-4 | 1-5 | | |
| *1 | Proportions of **α** and **β** in 65 parts of gypsum hemihydrate | **α** | 100 | 95 | 90 | 85 | 80 | 70 | 60 | |
| | | **β** | 0 | 5 | 10 | 15 | 20 | 30 | 40 | |
| | Amount of **β** in base material (parts) | | 0 | 3.3 | 6.5 | 9.8 | 13.0 | 19.5 | 26.0 | |
| | Cement (parts) | | 15 | 15 | 15 | 15 | 15 | 15 | 15 | *3 |
| | Inorganic aggregate (parts) | | 20 | 20 | 20 | 20 | 20 | 20 | 20 | |
| *2 | Viscosity (dPa·s) | | 12 | 14 | 15 | 16 | 15 | 18 | 27 | 10 to 20 |
| | Usable time (min) | | 29 | 30 | 30 | 30 | 28 | 28 | 27 | 20 or longer |
| | Light walking possible time (h: min) | 10°C | 5:30 | 5:00 | 4:00 | 4:00 | 3:45 | 3:45 | 3:45 | 5:00 or shorter |
| | | 20°C | 3:00 | 3:15 | 3:15 | 3:15 | 3:15 | 3:15 | 3:15 | |

| | | | | | | | | | | |
|---|---|---|---|---|---|---|---|---|---|---|
| *1 Combination in base material *2 Evaluation results *3 Target value for accomplishment | | | | | | | | | | |

As a result of studies on Examples 1-1 to 1-5 and Comparative Examples 1 and 2, those described below were found, as shown in Table 1. It was ascertained that the slurry using a conventional SL material of Comparative Example 1, where the whole gypsum hemihydrate, which was used for the base material, was composed of **α**-gypsum hemihydrate, exhibited a light walking possible time of about 3 hours under the condition of setting the room temperature at 20°C but exceeded 5 hours under the condition of setting the room temperature at 10°C. This shows that the composition of Comparative Example 1 had no problem in terms of the viscosity and the usable time but gave a significant influence on the workability because the light walking possible time was significantly different depending on the difference in the room temperature condition by about 10°C. Based on this fact, when large air temperature differences due to the season or the region where slurries are used, and air temperature differences which occur in one day are taken into consideration, it is understood that the development of a composition which improves this point, that is, with which the influence on the light walking possible time that occurs due to the differences in the room temperature condition (air temperature fluctuations) is suppressed is an urgent need.

It was ascertained that as compared to Comparative Example 1 described above, the light walking possible time for any of the slurries prepared using the compositions of Examples 1-1 to 1-5 and Comparative Example 2 is shorter than that for the slurry of Comparative Example 1 as shown in Table 1 and can be shortened without exceeding 5 hours even under a low temperature condition of 10°C. Further, by adjusting the blending proportion of **β-**gypsum hemihydrate which is used together with **α**-gypsum hemihydrate (proportions of **α** and **β**) in composition of the gypsum hemihydrate which is an essential component of the base material, the difference between the light walking possible time under a condition of 10°C and the light walking possible time at 20°C can be made small. Specifically, it was found that the difference for the slurry of Comparative Example 1 was as large as 2 hours and 30 minutes, but in contrast, the difference for the slurries of Examples 1-3 to 1-5 and Comparative Example 2 can be shortened to 45 minutes to 30 minutes. This means that the influence of the SL material composition of the present invention, in which **α**-gypsum hemihydrate and **β-**gypsum hemihydrate are used together in composition of the essential component of the base material, which is different from conventional compositions, on the light walking possible time in terms of the air temperature difference is small and the next work can be started stably with satisfactory work efficiency after conducting construction using the slurry.

More specifically, it was found that by blending **α**-gypsum hemihydrate and **β**-gypsum hemihydrate in proportions of 60 to 95 parts and 5 to 40 parts, respectively, in 100 parts of gypsum hemihydrate that forms the base material of the SL material, thereby using **α-**gypsum hemihydrate and **β**-gypsum hemihydrate together, as shown in Table 1, the influence on the light walking possible time by temperature conditions can be reduced. With respect to the composition of Comparative Example 2, having a combination of 60 parts of **α**-gypsum hemihydrate and 40 parts of **β**-gypsum hemihydrate, the light walking possible time was improved as compared to that for the composition of Comparative Example 1, and there was no problem in the usable time, but it was ascertained that the composition of Comparative Example 2 had, as another problem, a problem in practical use that the viscosity is too high when it was made into a slurry. Therefore, as an essential requirement, the present invention specifies that the content of **α**-gypsum hemihydrate is 70 to 95 parts and the content of **β**-gypsum hemihydrate is 5 to 30 parts when the total amount of **α**-gypsum hemihydrate and **β**-gypsum hemihydrate, as the gypsum hemihydrate that forms the base material, is assumed to be 100 parts. Moreover, as can be seen from the results in Table 1, in composition of 100 parts of gypsum hemihydrate in the present invention, the blending amount of **α**-gypsum hemihydrate is preferably set to 70 to 90 parts and the blending amount of **β**-gypsum hemihydrate is preferably set to 10 to 30 parts, and further, in terms of viscosity, the blending amount of **α-**gypsum hemihydrate is more preferably set to 80 to 90 parts and the blending amount of **β**-gypsum hemihydrate is more preferably set to 10 to 20 parts. Furthermore, as shown in Example 1-5, when the content of **β**-gypsum hemihydrate is 20 parts by mass or less assuming that the total amount of the base material is 100 parts by mass, the problem that the viscosity is too high, which is due to using **β**-gypsum hemihydrate together with **α**-gypsum hemihydrate, does not occur. In contrast, as shown in Comparative Example 2, when the content of **β**-gypsum hemihydrate is larger than 20 parts by mass, it is not suitable for practical use because the viscosity is too high.

### [Examples 2-1 to 2-6 and Comparative Example 3]

From the results in Examples 1 described above, as gypsum hemihydrate that forms the base material, gypsum hemihydrate obtained by blending 90 parts of **α**-gypsum hemihydrate and 10 parts of **β**-gypsum hemihydrate (**α**:**β** = 90:10) was used. As shown in Table 2, composition of the base materials was changed in a stepwise manner in a range of 50 to 80 parts in terms of the amount of gypsum hemihydrate being an essential component and having composition described above. As base material components, an inorganic aggregate (calcium carbonate) in a constant amount, 20 parts, and cement (normal Portland cement) the amount of which was changed in a stepwise manner in a range of 0 to 30 parts were added to these base materials to prepare each of compositions of Examples 2-1 to 2-6 and Comparative Example 3. Specifically, the setting retarder, the expansion depressant, the thickener, and the defoamer each in a predetermined amount were added in the same manner as in Examples 1 to the above-described 7 types of the base materials each having different composition to obtain SL materials.

Evaluations were conducted according to the following methods using 100 parts of each of the SL materials obtained above. Firstly, 35 parts of water based on 100 parts of the SL material was added to prepare a slurry for evaluation. In order to conduct the evaluations under the same condition, the fluidity was adjusted by blending a water reducing agent in such a way that the flow value fell within 230±2 mm for all the slurries when the slurries were prepared.

### (Evaluations)

The physical property values of each slurry of the SL materials obtained in the manner as described above and the light walking possible time at the time when construction was conducted using the slurry were measured in the same manner as described above. Note that the change in length specified in JASS 15M-103 (quality standards for self-leveling materials) was ascertained to be 0.05% or less in all the tests. The test results are shown together in Table 2.

| Table 2: Combination in base material of SL material in Examples 2 and Comparative Example 3, and evaluation results for each slurry | | | | | | | | | | |
|---|---|---|---|---|---|---|---|---|---|---|
| | | | Example | | | | | | Comparative Example 3 | |
| | | | 2-1 | 2-2 | 2-3 | 2-4 | 2-5 | 2-6 | | |
| *1 | Gypsum hemihydrate **α**:**β**=90:10 | | 80 | 75 | 70 | 65 | 60 | 55 | 50 | |
| | Amount of **β** in base material | | 8.0 | 7.5 | 7.0 | 6.5 | 6.0 | 5.5 | 5.0 | |
| | Cement | | 0 | 5 | 10 | 15 | 20 | 25 | 30 | *3 |
| | Inorganic aggregate | | 20 | 20 | 20 | 20 | 20 | 20 | 20 | |
| *2 | Viscosity (dPa·s) | | 15 | 16 | 18 | 15 | 15 | 20 | 24 | 10 to 20 |
| | Usable time (min) | | 31 | 30 | 30 | 30 | 28 | 27 | 29 | 20 or longer |
| | Light walking possible time (h: min) | 10°C | 3:45 | 3:45 | 4:00 | 4:00 | 4:00 | 4:15 | 4:30 | 5:00 or shorter |
| | | 20°C | 3:15 | 3:15 | 3:15 | 3:15 | 3:15 | 3:15 | 3:30 | |

| | | | | | | | | | | |
|---|---|---|---|---|---|---|---|---|---|---|
| *1 Combination in base material (parts) *2 Evaluation results *3 Target value for accomplishment | | | | | | | | | | |

As shown in Table 2, it was ascertained that in the case where the cement is used as a constituent of the base material, there is a tendency that the light walking possible time is long when the blending amount of the cement is large because it is considered that the amount of **β**-gypsum hemihydrate in the base material is relatively small when the blending amount of the cement is large. Further, as shown in Comparative Example 3, it was found that when the total amount of the materials for the base material other than gypsum hemihydrate is large, the viscosity of the slurry is increased to make the slurry inferior in the workability.

### [Examples 3-1 to 3-4 and Comparative Example 4]

From the results in Examples 1, as gypsum hemihydrate that forms the base material, gypsum hemihydrate obtained by blending 90 parts of **α**-gypsum hemihydrate and 10 parts of **β**-gypsum hemihydrate (**α**:**β** = 90:10) was used. As shown in Table 3, composition of the base materials was changed in a stepwise manner in a range of 45 to 85 parts in terms of the amount of gypsum hemihydrate having composition described above. Cement (normal Portland cement) in a constant amount, 15 parts, and, further, an inorganic aggregate (calcium carbonate) the amount of which was changed in a stepwise manner in a range of 0 to 40 parts were added to these base materials to prepare SL compositions of Examples 3-1 to 3-4 and Comparative Example 4. Specifically, the setting retarder, the expansion depressant, the thickener, and the defoamer each in a predetermined amount were added in the same manner as in Examples 1 to the above-described 5 types of the base materials each having different composition to obtain SL materials.

Evaluations were conducted according to the following methods using 100 parts of each of the SL materials obtained above. Firstly, 35 parts of water based on 100 parts of the SL material was added to prepare a slurry for evaluation. In order to conduct the evaluations under the same condition, the fluidity was adjusted by blending a water reducing agent in such a way that the flow value fell within 230±2 mm for all the slurries when the slurries were prepared.

### (Evaluations)

The physical property values of each slurry of the SL materials obtained in the manner as described above and the light walking possible time at the time when construction was conducted using the slurry were measured in the same manner as described above. Note that the change in length specified in JASS 15M-103 (quality standards for self-leveling materials) was ascertained to be 0.05% or less in all the tests. The test results are shown together in Table 3.

| Table 3: Combination in base material of SL material in Examples 3 and Comparative Example 4, and evaluation results for each slurry | | | | | | | | |
|---|---|---|---|---|---|---|---|---|
| | | | Example | | | | Comparative Example 4 | |
| | | | 3-1 | 3-2 | 3-3 | 3-4 | | |
| *1 | Gypsum hemihydrate (**α**:**β**=90:10) | | 85 | 75 | 65 | 55 | 45 | |
| | Amount of **β** in base material | | 8.5 | 7.5 | 6.5 | 5.5 | 4.5 | |
| | Normal Portland cement | | 15 | 15 | 15 | 15 | 15 | *3 |
| | Inorganic aggregate | | 0 | 10 | 20 | 30 | 40 | |
| *2 | Viscosity (dPa·s) | | 11 | 13 | 15 | 18 | 22 | 10 to 20 |
| | Usable time (min) | | 30 | 30 | 30 | 30 | 32 | 20 or longer |
| | Light walking possible time (h: min) | 10°C | 4:00 | 4:00 | 4:00 | 4:30 | 5:15 | 5:00 or shorter |
| | | 20°C | 3:15 | 3:15 | 3:15 | 3:15 | 3:15 | |

| | | | | | | | | |
|---|---|---|---|---|---|---|---|---|
| *1 Combination in base material (parts) *2 Evaluation results *3 Target value for accomplishment | | | | | | | | |

As shown in Table 3, it was found that when the blending amount of the inorganic aggregate is large, there is a tendency that the effect of shortening the light walking possible time, obtained by devising composition of gypsum hemihydrate, is impaired to make the light walking possible time long because it is considered that the amount of **β**-gypsum hemihydrate in the base material is relatively small. Further, it was found that when the amount of the materials for the base material other than the gypsum hemihydrate is large exceeding half of the total amount of the base material, the effect of shortening the light walking possible time at a low temperature condition is almost lost as shown in Comparative Example 4, which is similar to the cases of Examples 2.

### [Examples 4-1 to 4-4 and Comparative Examples 5 and 6]

In the present examples, SL materials were prepared in the same manner as in Examples 1, adding a constant amount, 15 parts, of the cement to the base materials and using gypsum hemihydrate in which the blending proportions of **α**-gypsum hemihydrate and **β**-gypsum hemihydrate (proportions of **α** and **β**) were changed in a stepwise manner as shown in Table 4. The obtained SL materials were evaluated in the same manner as in Examples 1. Note that the change in length specified in JASS 15M-103 (quality standards for self-leveling materials) was ascertained to be 0.05% or less in all the tests. The obtained evaluation results are shown together in Table 4.

| Table 4: Combination in base material of SL material in Examples 4 and Comparative Examples 5 and 6, and evaluation results for each slurry | | | | | | | | | |
|---|---|---|---|---|---|---|---|---|---|
| | | | Comparative Example 5 | Example | | | | Comparative Example 6 | |
| | | | | 4-1 | 4-2 | 4-3 | 4-4 | | |
| *1 | Proportions of **α** and **β** in 85 parts of gypsum hemihydrate | **α** | 100 | 95 | 90 | 85 | 80 | 70 | |
| | | **β** | 0 | 5 | 10 | 15 | 20 | 30 | |
| | Amount of **β** in base material (parts) | | 0 | 4 | 9 | 13 | 17 | 25.5 | *3 |
| | Normal Portland cement (parts) | | 15 | 15 | 15 | 15 | 15 | 15 | |
| *2 | Viscosity (dPa·s) | | 10 | 11 | 11 | 15 | 17 | 24 | 10 to 20 |
| | Usable time (min) | | 29 | 30 | 30 | 30 | 30 | 29 | 20 or longer |
| | Light walking possible time (h: min) | 10°C | 5:30 | 4:45 | 4:00 | 3:45 | 3:45 | 3:45 | 5:00 or shorter |
| | | 20°C | 3:00 | 3:15 | 3:15 | 3:15 | 3:15 | 3:15 | |

| | | | | | | | | | |
|---|---|---|---|---|---|---|---|---|---|
| *1 Combination in base material *2 Evaluation results *3 Target value for accomplishment | | | | | | | | | |

As shown in Table 4, it was found that by using the cement as the material for the base material, it can effectively be suppressed that the viscosity of the slurry is increased too much due to making the blending amount of **β**-gypsum hemihydrate large. However, it was found that when the amount of **β**-gypsum hemihydrate in 100 parts of the total amount of the base material exceeds 20 parts, the viscosity of the slurry is increased in spite of using the cement as the material for the base material, making the workability poor, as shown in Comparative Example 6.

### [Examples 5-1 to 5-4 and Comparative Examples 7 and 8]

In the present Examples, which are different from other Examples, SL materials were prepared using only gypsum hemihydrate without using the cement or the inorganic aggregate as the material for the base material. Specifically, the SL materials were prepared in the same manner as in Examples 1, using **α**-gypsum hemihydrate and **β-**gypsum hemihydrate, as gypsum hemihydrate that forms the base material, changing the blending proportions in a stepwise manner as shown in Table 5. The obtained SL materials were evaluated in the same manner as in Examples 1. Note that the change in length specified in JASS 15M-103 (quality standards for self-leveling materials) was ascertained to be 0.05% or less in all the tests. The obtained evaluation results are shown together in Table 5.

| Table 5: Combination in base material of SL material in Examples 5 and Comparative Examples 7 and 8, and evaluation results for each slurry | | | | | | | | | |
|---|---|---|---|---|---|---|---|---|---|
| | | | Comparative Example 7 | Example | | | | Comparative Example 8 | |
| | | | | 5-1 | 5-2 | 5-3 | 5-4 | | |
| *1 | Proportions of gypsum hemihydrate | **α** | 100 | 95 | 90 | 85 | 80 | 75 | |
| | | **β** | 0 | 5 | 10 | 15 | 20 | 25 | *3 |
| | Amount of **β** in base material (parts) | | 0 | 5.0 | 10.0 | 15.0 | 20.0 | 25.0 | |
| *2 | Viscosity (dPa·s) | | 10 | 14 | 15 | 17 | 18 | 23 | 10 to 20 |
| | Usable time (min) | | 29 | 29 | 30 | 28 | 28 | 28 | 20 or longer |
| | Light walking possible time (h: min) | 10°C | 5:30 | 4:45 | 4:00 | 3:45 | 3:45 | 3:45 | 5:00 or shorter |
| | | 20°C | 3:15 | 3:15 | 3:15 | 3:15 | 3:15 | 3:15 | |

| | | | | | | | | | |
|---|---|---|---|---|---|---|---|---|---|
| *1 Combination in base material *2 Evaluation results *3 Target value for accomplishment | | | | | | | | | |

As shown in Table 5, from the comparison with Comparative Example 7 where the amount of **α**-gypsum hemihydrate was set to 100 parts, it was found that by using **α**-gypsum hemihydrate and **β**-gypsum hemihydrate together by blending **α**-gypsum hemihydrate and **β**-gypsum hemihydrate in the proportions of 75 to 95 parts and 5 to 25 parts, respectively, in 100 parts of gypsum hemihydrate that forms the base material, the influence on lengthening the light walking possible time, which occurs under low temperature conditions, can be reduced. However, it was found that with respect to the composition of Comparative Example 8, having a combination of 75 parts of **α**-gypsum hemihydrate and 25 parts of **β**-gypsum hemihydrate, the light walking possible time is improved, and the there is no problem on the usable time, but it was found that the composition of Comparative Example 8 has, as another problem, a problem in practical use that the viscosity is increased by two times or higher when it is made into a slurry than the viscosity of the composition of Comparative Example 7 where **β**-gypsum hemihydrate is not used together with **α**-gypsum hemihydrate, because the content of **β**-gypsum hemihydrate, assuming that the total amount of the base material is 100 parts by mass, exceeds 20 parts by mass. From such a reason in practical use, the SL material of the present invention is required to have the content of **β-**gypsum hemihydrate of 20 parts by mass or less when the total amount of the base material is assumed to be 100 parts by mass. From the results in Table 5, it was found that in the case where the base material that forms the SL material of the present invention is composed of only gypsum hemihydrate, it is effective to set the content of **α**-gypsum hemihydrate to 80 to 95 parts and set the content of **β**-gypsum hemihydrate to 5 to 20 parts, and more suitably set the content of **α**-gypsum hemihydrate to 80 to 90 parts and set the content of **β**-gypsum hemihydrate to 10 to 20 parts when the total amount of **α**-gypsum hemihydrate and **β-**gypsum hemihydrate is assumed to be 100 parts.

## Claims

1. A gypsum-based self-leveling material composition comprising:
a base material component comprising gypsum hemihydrate as an essential component and optionally comprising at least any one of an inorganic aggregate and cement as an optional component; and
an additive, wherein:
when the total amount of the base material components is assumed to be 100 parts by mass, a content of the gypsum hemihydrate is 55 to 100 parts by mass;
the gypsum hemihydrate comprises **α**-gypsum hemihydrate and **β**-gypsum hemihydrate, and when the total amount of **α-**gypsum hemihydrate and **β**-gypsum hemihydrate is assumed to be 100 parts by mass, a content of **α**-gypsum hemihydrate is 70 to 95 parts by mass, and a content of **β**-gypsum hemihydrate is 5 to 30 parts by mass, and further, when the total amount of the base material components is assumed to be 100 parts by mass, the content of **β**-gypsum hemihydrate is 20 parts by mass or less; and
a change in length, specified in JASS 15M-103 (quality standards for self-leveling materials), is 0.05% or less.

2. The gypsum-based self-leveling material composition according to claim 1, wherein when the total amount of the base material components is assumed to be 100 parts by mass, the content of the gypsum hemihydrate is 55 to 100 parts by mass, the content of the cement is 0 to 25 parts by mass, and the content of the inorganic aggregate is 0 to 30 parts by mass.

3. The gypsum-based self-leveling material composition according to claim 1 or 2, wherein the cement is any one selected from the group consisting of normal Portland cement, high-early-strength Portland cement, blast furnace cement, and alumina cement.

4. The gypsum-based self-leveling material composition according to any one of claims 1 to 3, wherein constituents of the base material are the gypsum hemihydrate and the cement.

5. The gypsum-based self-leveling material composition according to any one of claims 1 to 3, wherein the inorganic aggregate is calcium carbonate.

6. The gypsum-based self-leveling material composition according to any one of claims 1 to 5, wherein when the total amount of the gypsum hemihydrate is assumed to be 100 parts by mass, the content of **α**-gypsum hemihydrate is 80 to 90 parts by mass, and the content of **β**-gypsum hemihydrate is 10 to 20 parts by mass.

7. The gypsum-based self-leveling material composition according to claim 1, wherein when the total amount of the base material components is assumed to be 100 parts by mass, the content of the gypsum hemihydrate is 100 parts by mass, and the optional components are not contained.
